# FASCICULE DE BREVET EUROPEEN

(11) **EP 2 417 376 B1**
(45) Date de publication et mention de la délivrance du brevet: **05.06.2013**
(21) Numéro de dépôt: 10713330.8
(22) Date de dépôt: 06.04.2010
(51) Int. Cl.: F16F 7/08

(54) **DISPOSITIF A GLISSEMENT AVEC FRICTION CONTROLEE, TEL QU'UN AMORTISSEUR, POUVANT FONCTIONNER DANS LES DEUX SENS**
VORRICHTUNG ZUR KONTROLLIERTEN REIBUNG, WIE EIN DÄMPFER, DIE IN ZWEI RICHTUNGEN BETRIEBEN WERDEN KANN
CONTROLLED-FRICTION SLIDING DEVICE, SUCH AS A DAMPER, WHICH CAN OPERATE IN TWO DIRECTIONS

(30) Priorité: 06.04.2009 FR 0901682
(43) Date de publication de la demande: 15.02.2012
(73) Titulaire: Messier-Bugatti-Dowty, 78140 Velizy Villacoublay (FR)
(72) Inventeur: LAFITTE, Arnaud, F-92370 Chaville (FR); VERLICK, Sabien, F-32550 Auterrive (FR)
(74) Mandataire: Parzy, Benjamin Alain
(86) Numéro de dépôt international: PCT/EP2010/054540
(87) Numéro de publication internationale: WO 2010/115896

(56) Documents cités:
- JP-A- 11 063 060
- JP-U- 61 036 474
- US-B1- 6 293 573

## Description

L'invention est relative à un dispositif à glissement avec friction contrôlée, tel qu'un amortisseur, pouvant fonctionner dans les deux sens.

### ETAT DE LA TECHNIQUE

Il est connu du document FR2905997 un dispositif à friction contrôlée comportant un premier et un deuxième élément montés mobiles l'un part rapport à l'autre selon une direction de glissement, un organe frotteur étant disposé entre les deux éléments et rappelé vers une position de coincement par un organe presseur pour, dans un sens de déplacement relatif des éléments le long de la direction de déplacement, empêcher le déplacement des deux éléments, et dans l'autre sens de déplacement relatif, exercer sur les deux éléments un effort de friction résistant dépendant d'une contrainte installée sur l'organe de coin par l'organe presseur.

A cet effet, l'organe frotteur comporte une surface de frottement contre l'un des éléments, et une surface d'appui contre l'autre des éléments, ces deux surfaces faisant entre elles un angle.

Ce dispositif a l'inconvénient de ne fonctionner que dans un sens.

Par ailleur, le document JP 61-0364747 U décrit un dispositif selon le preambule de la revendication 1.

### OBJET DE L'INVENTION

L'invention vise à symétriser le dispositif connu pour permettre un déplacement sous friction contrôlée dans les deux sens.

### BREVE DESCRIPTION DE L'INVENTION

En vue de la réalisation de ce but, il est proposé un dispositif à friction contrôlée comportant un premier et un deuxième élément montés mobiles l'un part rapport à l'autre selon une direction de glissement, caractérisé en ce que le dispositif de l'invention comporte des premier et deuxième organes frotteurs disposés de façon symétrique entre les deux éléments pour frotter sélectivement sur le deuxième élément, les organes frotteurs étant rappelés chacun vers une position de coincement par un organe presseur, le premier organe frotteur étant disposé pour, dans un premier sens de déplacement relatif des deux éléments le long de la direction de déplacement, tendre à empêcher le déplacement relatif des deux éléments, et dans un deuxième sens, exercer sur les deux éléments un effort de friction résistant dépendant d'une contrainte installée sur le premier organe de coin par l'organe presseur ; tandis que le deuxième organe frotteur est disposé pour dans le deuxième sens, tendre à empêcher le déplacement relatif des deux éléments, et dans le premier sens, exercer sur les deux éléments un effort de friction résistant dépendant d'une contrainte installée sur le deuxième organe de coin par l'organe presseur ; le dispositif comprenant en outre des moyens de neutralisation pour neutraliser celui des organes frotteurs susceptible de bloquer le déplacement relatif des éléments dans un sens ou dans l'autre, en laissant l'autre organe frotteur exercer l'effort de friction résistant.

Ainsi, l'organe frotteur susceptible de bloquer le mouvement est empêché par les moyens de neutralisation d'exercer son effet de blocage. Les éléments sont alors libres de se déplacer dans le sens considéré, à l'encontre de l'effort de friction résistant exercé par l'autre organe frotteur. Lors d'un déplacement en sens contraire, le rôle des organes frotteurs est alors inversé.

### BREVE DESCRIPTION DES FIGURES

L'invention sera mieux comprise en référence aux figures des dessins annexés, parmi desquels :
- la figure 1 est une vue schématique d'un dispositif selon l'invention ;
- la figure 2 est une vue en coupe schématique d'un amortisseur à friction mettant en oeuvre l'invention.

### DESCRIPTION DETAILLEE DES FIGURES

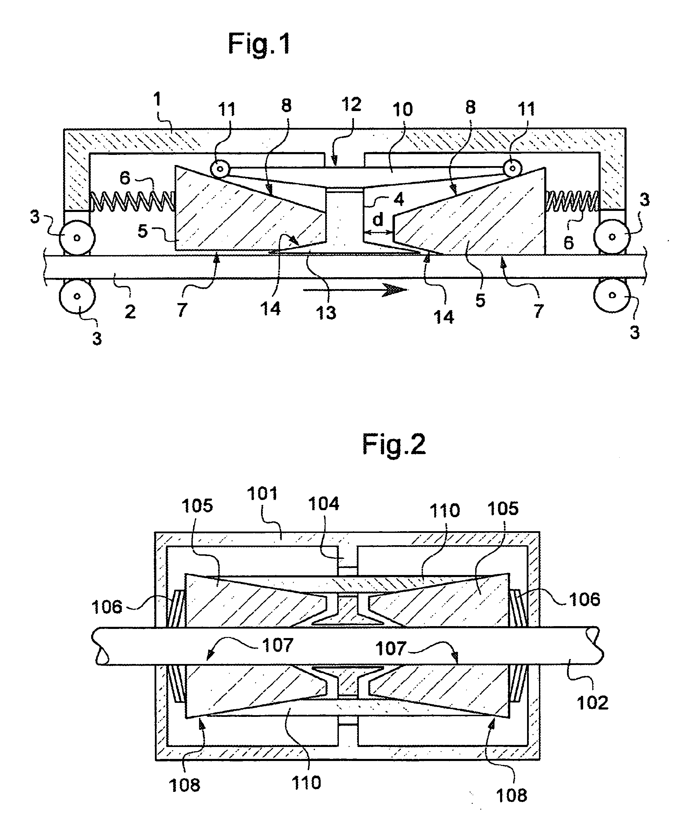

En référence à la figure 1, le dispositif de l'invention, comporte un premier élément 1, ici immobile, et un deuxième élément 2, monté sur le premier élément 1 pour coulisser selon une direction longitudinale. A cet effet, le premier élément 1 porte des galets 3 de guidage du deuxième élément 2. Ici, et pour les besoins de l'explication, on suppose que le deuxième élément se déplace vers la droite, comme illustré par la flèche sur la figure.

Le premier élément 1 comporte un mur 4 de part et d'autre duquel sont disposés deux organes frotteurs, en l'occurrence deux coins 5 qui sont rappelés vers le mur 4 par un organe presseur comportant ici deux ressorts 6. Chacun des coins comporte une surface de frottement 7 contre le deuxième élément 2, et une surface d'appui opposée 8 formant un angle avec la surface de frottement. Les coins 5 sont disposés symétriquement de part et d'autre du mur 4.

Une balance 10 s'étend au travers du mur 4 de sorte que ses deux extrémités viennent en appui contre la surface d'appui 8 de chacun des coins 5, ici par l'intermédiaire de galets 11. La balance 10 est ici en appui contre un dos 12 du mur 4 de sorte que la balance est libre de se déplacer, parallèlement à elle-même selon une direction parallèle à la direction de déplacement du deuxième élément 2.

Enfin, le mur 4 se termine de part et d'autre par deux pieds de soulèvement 13 à face oblique susceptibles de coopérer chacun avec une face oblique homologue 14 des coins 5.

Le fonctionnement du dispositif est le suivant. En phase de repos, lorsqu'aucun déplacement relatif n'est imposé entre le premier élément 1 et le deuxième élément 2, les ressorts 6 centrent les coins 5 et la balance 6 par rapport au mur 4. Les coins 5 reposent par leur surface de frottement 7 contre le deuxième élément 2.

Puis, lorsque le deuxième élément 2 est déplacé, ici vers la droite, le coin de gauche, poussé par la balance 10 contre le deuxième élément 2 se déplace avec ce dernier jusqu'à ce que la face oblique 14 monte sur le pied de soulèvement 13 en regard. Le coin de gauche est alors soulevé de sorte que la surface de frottement 7 est décollée du deuxième élément 2. Le coin ne peut plus frotter sur le deuxième élément 2, de sorte qu'il est neutralisé. Il n'oppose plus de résistance au déplacement du deuxième élément 2.

Le coin de gauche est alors maintenu en butée contre le mur 4 par le ressort 6 correspondant. On remarquera que la balance 10 s'est déplacée vers la droite d'une même quantité.

Quant au coin de droite, il se déplace initialement avec le deuxième élément 2, en étant poussé par la balance 10, jusqu'à ce que le coin de gauche s'immobilise contre le mur 4. Lors du déplacement ultérieur du deuxième élément 2, le coin de droite a tendance à être entraîné par le deuxième élément, contre la résistance opposée par le ressort 6 correspondant. Le coin de droite trouve alors une position d'équilibre dans laquelle il exerce sur le deuxième élément un effort de friction contrôlé par la contrainte exercée par le ressort 6. Le coin de droite exerce alors sa fonction de frotteur.

Il va de soi que le dispositif est symétrique, et qu'un déplacement du deuxième élément 2 vers la gauche du deuxième élément 2 entraînerait la neutralisation du coin de droite, et l'activation du coin de gauche en tant que frotteur.

On remarquera qu'il existe une zone morte au moment du changement de sens de déplacement. En effet, Quand le deuxième élément change de sens il entraîne le coin de droite avec lui jusqu'à ce que celui-ci vienne en butée contre le mur 4, tandis que le coin de gauche est repoussé par la balance 10. Cette distance, notée d sur la figure 1, correspond à la zone morte dans laquelle le deuxième élément ne subit aucun effort résistant.

On remarquera également que la balance 10 forme un organe d'écartement des coins 5, maintenant entre eux la même distance et se déplaçant avec ceux-ci lorsqu'ils sont tous deux entraînés par le deuxième élément 2. La balance 10 forme également un organe d'appui pour la face d'appui 7, permettant au coin activé de produire l'effort de friction contrôlé.

Le principe expliqué ci-dessus peut être mis en oeuvre dans de nombreuses applications. A titre d'exemple, la figure 2 illustre de façon schématique un amortisseur de shimmy pouvant par exemple être employé pour amortir le shimmy d'un atterrisseur.

Sur la figure 2, les éléments homologues à ceux de la figure 1 portent une référence augmentée d'une centaine. Les diverses pièces ont ici une symétrie de révolution. On reconnaît les deux éléments mobiles relativement l'un à l'autre, en l'occurrence le corps 101 de l'amortisseur dans lequel une tige 102 est montée coulissante. Les deux coins 5 sont ici remplacés par des frotteurs de révolution 105 dont la surface de frottement intérieure 107 sur la tige 102 est cylindrique, tandis que la surface d'appui 108 extérieure est conique. On retrouve le mur central 104, avec sa base évasée qui forme les cônes de soulèvement 113, homologues des pieds de soulèvement 13.

L'organe ressort comprend, ici des rondelles élastiques 106 qui exercent sur les frotteurs une contrainte tendant à rappeler ces derniers vers le mur 104.

L'organe d'écartement et d'appui est ici une douille 110 apte à venir en appui sur les surfaces d'appui extérieures coniques 108 des frotteurs 105. La douille 110 passe au travers du mur 104. A cet effet, le mur 104 et la douille 110 ont des ouvertures adéquates permettant le libre déplacement de la douille 110 parallèlement à la direction de déplacement de la tige 102. De la même façon que la balance 10, la douille 110 assure l'écartement constant des frotteurs 105 à l'encontre des organes ressorts 106, tout en assurant un appui (par l'intermédiaire de la surface conique 108) des frotteurs contre la tige 102.

L'ensemble fonctionne de la même façon que le dispositif de la figure 1. Ainsi, tant que les déplacements de la tige 102 relativement au corps 101 restent inférieurs à la longueur de zone morte, la tige ne subit pas d'effort de friction résistant. Cependant, si les déplacements de la tige 102 sont supérieurs à la longueur de zone morte, la tige subit alors un effort de friction contrôlé. Ainsi un tel dispositif peut être utilement utilisé pour amortir des vibrations dont l'amplitude augmente au-delà d'un seuil donné, déterminé par la zone morte de l'amortisseur.

On notera ici que le frotteur qui s'approche du mur 104 est neutralisé en chevauchant le cône de soulèvement 113, ce qui provoque une expansion radiale du frotteur, l'empêchant de frotter sur la tige 102.

L'invention n'est pas limitée à ce qui vient d'être décrit, mais englobe toute variante entrant dan le cadre défini par les revendications. En particulier, bien que dans les dispositifs illustrés ici, les deux éléments sont mobiles selon une direction rectiligne, on pourra bien sûr prévoir des directions de déplacement non rectilignes, par exemple une direction circulaire. En outre, l'association des deux organes pourra être répétée, soit en série, soit en parallèle.

## Revendications

1. Dispositif à friction contrôlée comportant un premier et un deuxième élément (1, 2 ; 102, 102) montés mobiles l'un part rapport à l'autre selon une direction de glissement, le dispositif comportant des premier et deuxième organes frotteurs (5, 5 ; 105 ,105) disposés de façon symétrique entre les deux éléments pour frotter sélectivement sur le deuxième élément, les organes frotteurs étant rappelés chacun vers une position de coincement par un organe presseur (6 ; 106), le premier organe frotteur étant disposé pour, dans un premier sens de déplacement relatif des deux éléments le long de la direction de déplacement, tendre à empêcher le déplacement relatif des deux éléments, et dans un deuxième sens, exercer sur les deux éléments un effort de friction résistant dépendant d'une contrainte installée sur le premier organe de coin par l'organe presseur ; tandis que le deuxième organe frotteur est disposé pour dans le deuxième sens, tendre à empêcher le déplacement relatif des deux éléments, et dans le premier sens, exercer sur les deux éléments un effort de friction résistant dépendant d'une contrainte installée sur le deuxième organe de coin par l'organe presseur ; le dispositif étant **caractérisé en ce qu'**il comprend en outre des moyens de neutralisation (10, 13, 14 ; 110, 113, 114) pour neutraliser celui des organes frotteurs susceptible de bloquer le déplacement relatif des éléments dans un sens ou dans l'autre, en laissant l'autre organe frotteur exercer l'effort de friction résistant.

2. Dispositif selon la revendication 1, dans lequel les moyens de neutralisation comportent des moyens de soulèvement (13, 14 ; 113, 114) pour soulever une surface de frottement (7 ; 107) de chacun des organes frotteurs de celui des éléments en regard de cette surface de frottement.

3. Dispositif selon la revendication 2, dans lequel les moyens de soulèvement comportent des parties de soulèvement en coin (13, 113) sur lequel l'un des organes frotteurs, tout d'abord entraîné par le déplacement du deuxième élément, monte jusqu'à être décollé du deuxième élément.

4. Dispositif selon la revendication 3, dans lequel les parties de soulèvement en coin sont portés par un mur disposé entre les organes frotteurs (4 ; 104).

5. Dispositif selon la revendication 2, dans lequel les moyens de neutralisation comportent un organe d'appui et d'écartement (5 ; 105) qui s'étend entre les organes frotteurs pour être en appui sur une surface d'appui de chacun des organes frotteurs afin de maintenir ceux-ci écartés, l'organe d'appui et d'écartement étant libre de se déplacer avec les frotteurs lorsqu'ils sont tous deux entraînés par le deuxième élément (2).

## Patentansprüche

1. Vorrichtung zur kontrollierten Reibung, umfassend ein erstes und ein zweites Element (1, 2; 102, 102), die in einer Gleitrichtung beweglich relativ zueinander angeordnet sind, und wobei die Vorrichtung erste und zweite Reibungsorgane (5, 5; 105, 105) umfasst, die symmetrisch zwischen den beiden Elementen angeordnet sind, um selektiv auf dem zweiten Element zu schleifen, wobei die Reibungsorgane jeweils durch ein Druckorgan (6; 106) in eine Klemmposition zurückgestellt werden, wobei das erste Reibungsorgan so angeordnet ist, dass es in einer ersten Richtung einer Relativbewegung der beiden Elemente entlang der Verlagerungsrichtung versucht, die Relativbewegung der beiden Elemente zu verhindern, und in einer zweiten Richtung auf die beiden Elemente eine Reibwiderstandskraft ausübt, die von einer Spannung abhängt, die durch das Druckorgan auf das erste keilförmige Organ ausgeübt wird; während das zweite Reibungsorgan so angeordnet ist, dass es in der zweiten Richtung versucht, die Relativbewegung Verlagerung der beiden Elemente zu verhindern, und in der ersten Richtung auf die beiden Elemente eine Reibwiderstandskraft ausübt, die von einer auf das zweite keilförmige Organ durch das Druckorgan ausgeübten Spannung abhängt; und wobei die Vorrichtung **dadurch gekennzeichnet ist, dass** sie des Weiteren Neutralisierungsmittel (10, 13, 14; 110, 113, 114) umfasst, um dasjenige Reibungsorgan zu neutralisieren, das die Relativbewegung der Elemente in die eine oder andere Richtung blockieren kann, indem man das andere Reibungsorgan die Reibwiderstandskraft ausüben lässt.

2. Vorrichtung nach Anspruch 1, bei der die Neutralisierungsmittel Anhebemittel (13, 14 ; 113, 114) zum Abheben einer Reibungsfläche (7 ; 107) eines jeden Reibungsorgans von demjenigen Element umfassen, das sich gegenüber dieser Reibungsfläche befindet.

3. Vorrichtung nach Anspruch 2, bei der die Anhebemittel keilförmige Anhebeabschnitte (13, 113) umfassen, auf welche eines der Reibungsmittel, das zunächst durch die Verlagerung des zweiten Elements mitgenommen wurde, ansteigt, bis es vom zweiten Element gelöst wird.

4. Vorrichtung nach Anspruch 3, bei der die keilförmigen Anhebeabschnitte von einer zwischen den Reibungsorganen (4 ; 104) angeordneten Wand getragen sind.

5. Vorrichtung nach Anspruch 2, bei der die Neutralisierungsmittel ein Organ zur Auflage und zur Beabstandung (10; 110) umfassen, das sich zwischen den Reibungsorganen erstreckt, damit es auf einer Auflagefläche eines jeden Reibungsorgans aufliegt, so dass diese beabstandet gehalten werden, wobei das Organ zur Auflage und Beabstandung sich mit den Reibungsorganen verlagern kann, wenn sie beide durch das zweite Element (2) mitgenommen werden.

## Claims

1. Controlled friction device including a first and a second element (1, 2; 102, 102) mounted mobile relative to each other in a sliding direction, the device including first and second rubbing members (5, 5; 105, 105) disposed symmetrically between the two elements to rub selectively on the second element, the rubbing members each being biased to a wedging position by a pressing member (6; 106), the first rubbing member being disposed to tend to prevent relative movement of the two elements in a first direction of relative movement of the two elements in the direction of travel and to exert on the two elements a stress-dependent resisting friction force in a second direction, installed on the first wedge member by the pressing member, whilst the second wedge member is disposed so as to tend to prevent relative movement of the two elements in the second direction and to exert on the two elements a stress-dependent resisting friction force in the first direction, installed on the second wedge member by the pressing member, the device being **characterised in that** it further includes means (10, 13, 14; 110, 113, 114) for neutralizing the rubbing member liable to block relative movement of the elements in one direction or the other, leaving the other rubbing member to exert the resisting friction force.

2. Device according to claim 1, wherein the neutralizing means include lifting means (13, 14; 113, 114) for lifting a friction surface (7; 107) of each of the rubbing members off the element facing this friction surface.

3. Device according to claim 2, wherein the lifting means include lifting wedge portions (13, 113) on which one of the rubbing members, first driven by the movement of the second element, rises until lifted off the second element.

4. Device according to claim 3, wherein the lifting wedge portions are supported by a wall disposed between the rubbing members (4; 104).

5. Device according to claim 2, wherein the neutralizing means include a support and spacer member (5; 105) that extends between the rubbing members to bear on a bearing surface of each of the rubbing members to keep them apart, the support and spacer member being free to move with the rubbing members when both are driven by the second element (2).
